# EUROPÄISCHE PATENTANMELDUNG

(11) **EP 4 080 486 A1**
(43) Veröffentlichungstag der Anmeldung: **26.10.2022**
(21) Anmeldenummer: 22168899.7
(22) Anmeldetag: 19.04.2022
(51) Int. Cl.: G09B 23/18

(54) **ÜBUNGSSYSTEM ZUM ERLERNEN ELEKTRISCHER SCHALTUNGSANORDNUNGEN**

(30) Priorität: 20.04.2021 LU 500067
(71) Anmelder: Rittgen, Klaus, 55252 Mainz-Kastel (DE)
(72) Erfinder: Rittgen, Klaus, 55252 Mainz-Kastel (DE)
(74) Vertreter: Hoffmann, Jürgen

(57) **Zusammenfassung**

Die Erfindung betrifft ein Übungssystem zum Aufbauen und Ausprobieren elektrischer Schaltungsanordnungen. Das Übungssystem weist eine Platte auf, die eine Bedienseite und eine Montageseite aufweist und die mehrere elektrische Funktionseinheiten und mehrere Steckbuchsen trägt, wobei die elektrischen Funktionseinheiten von der Bedienseite aus sichtbar und/oder bedienbar angeordnet sind und wobei in die Steckbuchsen von der Bedienseite aus Stecker einsteckbar sind, und wobei jeder Funktionseinheit wenigstens zwei Steckbuchsen zugeordnet sind, die auf der Montageseite an die jeweilige Funktionseinheit elektrisch angeschlossen sind.

## Beschreibung

Die Erfindung betrifft ein Übungssystem zum Aufbauen und Ausprobieren elektrischer Schaltungsanordnungen.

Aus DE 720 83 16 U ist eine Schaltplatte zur Demonstration elektrischer bzw. elektronischer Schaltungen bekannt. Auf der Oberseite sind galvanisch miteinander verbundene Buchsengruppen zum Einstecken von Steckelementen vorhanden, wobei jede Buchsengruppe aus einer zentralen Buchse und mindestens vier diese umgebenden Buchsen besteht und alle Buchsenöffnungen in einer Ebene liegen. Bei einer in dieser Weise ausgebildeten Platte können elektrische Steckelemente, beispielsweise Steckelemente mit Transistoren, mit unterschiedlichem Steckerabstand verwendet werden.

Aus DE 740 92 20 U ist eine Experimentier-Schalttafel für Hörsäle und Praktikumsräume oder Labors bekannt, die mit Schalt-, Verteilungs- und Kontrollmitteln, wie z.B. mit Stellwiderständen, Stelltransformatoren, Gleichrichtern, Schaltorganen und Verteilungsmitteln ausgestattet ist.

Aus DE 202013105180 U1 ist eine Schalttafel zum Aufbau verschiedener elektrischer Schaltungen bekannt. Die Schalttafel weist eine Anschlussfläche auf, an der Anschlussmittel zum Anschluss elektrischer Bauelemente, Schaltungen, Baugruppen und/oder Schaltmodule vorgesehen sind, sowie Führungsmittel zum Führen elektrischer Leitungen. Die Schalttafel weist ein Solarmodul auf, das für die Energieversorgung der elektrischen Schaltungen vorgesehen ist.

Die Aus dem Stand der Technik bekannten Vorrichtungen haben insbesondere den Nachteil, dass sie nicht ohne umfangreiche Vorarbeiten einsetzbar sind,

Es ist daher die Aufgabe der vorliegenden Erfindung, ein unmittelbar ohne Vorarbeiten einsetzbares Übungssystem anzugeben, das ein einfaches Aufbauen und Ausprobieren elektrischer Schaltungsanordnungen ermöglicht.

Die Aufgabe wird Übungssystem zum Aufbauen und Ausprobieren elektrischer Schaltungsanordnungen, aufweisend eine Platte, die eine Bedienseite und eine Montageseite aufweist und die mehrere elektrische Funktionseinheiten und mehrere Steckbuchsen trägt, wobei die elektrischen Funktionseinheiten von der Bedienseite aus sichtbar und/oder bedienbar angeordnet sind und wobei in die Steckbuchsen von der Bedienseite aus Stecker einsteckbarsind, und wobei jeder Funktionseinheit wenigstens zwei Steckbuchsen zugeordnet sind, die auf der Montageseite an die jeweilige Funktionseinheit elektrisch angeschlossen sind, gelöst.

Das Übungssystem hat den ganz besonderen Vorteil, dass die elektrischen Funktionseinheiten fertig installiert für den Aufbau einer Schaltanordnung zur Verfügung stehen und ausschließlich durch das Einstrecken der (vorzugsweise einpoligen) Stecker von Kabeln auf einer Bedienseite elektrisch in die Schaltanordnung eingebunden werden können.

Bei einer ganz besonders vorteilhaften Ausführung sind die elektrischen Funktionseinheiten ausschließlich von der Montageseite aus montiert und ausschließlich von der Montageseite aus demontierbar, insbesondere zerstörungsfrei demontierbar. Eine solche Ausführung hat den ganz besonderen Vorteil, dass die Bedienseite frei von Befestigungsmitteln zum befestigen der elektrischen Funktionseinheiten bleiben kann, was die Übersichtlichkeit für den übenden ganz erheblich erhöht. Darüber hinaus hat eine solche Ausführung den ganz besonderen Vorteil, dass die Anschlussseiten der elektrischen Funktionseinheiten einfach vor einem unbefugten Zugriff durch die Übenden geschützt werden kann, beispielsweise indem die Montageseite eingehaust wird, was weiter unten noch im Detail beschrieben ist.

Ganz allgemein können Befestigungsmittel vorhanden sein, mittels denen die Funktionseinheiten an der Platte befestigt sind, wobei die Befestigungsmittel vorzugsweise ausschließlich auf der Montageseite angeordnet sind und/oder von der Montageseite aus zugänglich sind. Analog können weitere Befestigungsmittel vorhanden sein, mittels denen die Steckbuchsen an der Platte befestigt sind, wobei die weiteren Befestigungsmittel vorzugsweise ebenfalls ausschließlich auf der Montageseite angeordnet sind und/oder von der Montageseite aus zugänglich sind.

Insbesondere kann vorteilhaft vorgesehen sein, dass wenigstens eine der elektrischen Funktionseinheiten eine Bedien- und/oder Anzeigeseite aufweist, die auf der Bedienseite der Platte angeordnet ist. Bei einer ganz besonders vorteilhaften Ausführung weist jede der elektrischen Funktionseinheiten eine Bedien- und/oder Anzeigeseite auf, die auf der Bedienseite der Platte angeordnet ist. Eine solche Ausführung hat den ganz besonderen Vorteil, dass der Übende sich durch ein einfaches Herstellen von Steckverbindungen auf den Aufbau der Schaltungsanordnung konzentrieren kann und nicht durch optische Eindrücke der elektrischen Funktionseinheiten abgelenkt wird, die ihm hierfür nicht von Nutzen sind.

Bei einer besonderen Ausführung weist wenigstens eine der elektrischen Funktionseinheiten eine Anschlussseite auf, die auf der Montageseite der Platte angeordnet ist. Insbesondere kann vorteilhaft vorgesehen sein, dass jede der elektrischen Funktionseinheiten eine Anschlussseite aufweist, die auf der Montageseite der Platte angeordnet ist. Auf diese Weise wird vorteilhaft erreicht, dass die elektrischen Funktionseinheiten auf der Montageseite elektrisch an die Steckboxen angeschlossen sein können und die Bedienseite frei von hierfür erforderlichen elektrischen Leitungen und Montagematerial bleibt, was die Übersichtlichkeit für den Übenden erhöht.

Bei einer ganz besonders vorteilhaften Ausführung ist die Platte Teil eines Gehäuses des Übungssystems, wobei die Bedienseite auf der Außenseite des Gehäuses angeordnet ist und wobei die Montageseite im Gehäuseinneren angeordnet ist. Bei einer solchen Ausführung ist vorteilhaft erreicht, dass die Übenden die Montageseite nicht erreichen können und die elektrischen Funktionseinheiten daher vor einer Manipulation und/oder Beschädigung geschützt sind. Hierzu kann insbesondere vorteilhaft vorgesehen sein, dass das Gehäuse nicht werkzeugfrei und/oder zerstörungsfrei geöffnet werden kann.

Das Gehäuse kann vorteilhaft eine der Platte gegenüberliegende Rückwand aufweisen, die durchsichtig ausgebildet ist. Auf diese Weise ist vorteilhaft erreicht, dass die Übenden sehen können, wie die elektrischen Funktionseinheiten innerhalb des Übungssystems an die Steckbuchsen und/oder an andere Baueinheiten des Übungssystems angeschlossen sind. Dies ermöglichst es insbesondere, dass die Übenden nicht nur Schaltungsanordnungen aufbauen und ausprobieren können, sondern darüber hinaus auch, dass die Übenden sehen können, wie die für die Schaltungsanordnung verwendeten elektrischen Funktionseinheiten aufgebaut sind und wie diese bei einer Installation angeschlossen werden. Dennoch sind die Anschlussseiten der elektrischen Funktionseinheiten innerhalb des Gehäuses vor einer Manipulation wirkungsvoll geschützt.

Die Rückwand kann beispielsweise als Glasscheibe, insbesondere aus gehärtetem und/oder gefestigtem Glas, oder als Plexiglasscheibe ausgebildet sein.

Das Gehäuse kann einen umlaufenden vierseitigen Rahmen, insbesondere aus Strangpress-Profilteilen, aufweisen, in den auf der einen Seite die Platte und auf der anderen Seite die Rückwand eingesetzt ist. Eine solche Ausführung ist ganz besonders robust.

Das Übungssystem kann besonders vorteilhaft insbesondere dazu ausgebildet und bestimmt sein, auf einer horizontalen Aufstellfläche, insbesondere auf einer Tischplatte, derart aufgestellt zu werden, dass die die Platte vertikal ausgerichtet ist. Dies ermöglicht eine ergonomisch vorteilhafte Haltung der Übenden beim Aufbauen von Schaltungsanordnungen. Insbesondere ist auf diese Weise vermieden, dass sich die Übenden nach vorne überbeugen müssen, um Schaltungsanordnungen aufzubauen.

Bei einer ganz besonders vorteilhaften Ausführung weist das Übungssystem wenigstens ein Aufstell-Befestigungsmittel auf, mittels dem das Übungssystem, insbesondere zerstörungsfrei wieder lösbar, an einer, insbesondere horizontalen, Aufstellfläche befestigbar ist. Das Aufstell-Befestigungsmittel kann beispielsweise wenigstens einen Saugnapf aufweisen. Der Saugnapf kann vorteilhaft derart ausgebildet sein, dass er, beispielsweise mit einem Umschalthebel, wahlweise zwischen einem Befestigungszustand und einem Freigabezustand umschaltbar ist. Der Saugnapf kann Teil eines Saughalters sein. Alternativ oder zusätzlich kann das Aufstell-Befestigungsmittel beispielsweise auch eine Tischklemme, insbesondere zum Festklemmen an einer Tischkante, aufweisen.

Das Aufstell-Befestigungsmittel vorteilhaft direkt oder indirekt außen an dem Gehäuse befestigt sein. Bei einer vorteilhaften Ausführung, kann die Relativposition des Aufstell-Befestigungsmittels relativ zu dem Gehäuse verändert werden, beispielsweise um die Aufstellungshöhe einstellen zu können.

Beispielsweise kann das Aufstell-Befestigungsmittel einen Träger aufweisen, der einerseits an dem Gehäuse befestigt ist oder befestigbar ist und der andererseits wenigstens einen Saugnapf oder eine Tischklemme oder Ähnliches trägt. Beispielsweise um eine Höhen-und/oder Seiteneinstellung relativ zur Aufstellfläche realisieren zu können, kann der Träger ein Langloch aufweisen, durch das eine Befestigungsschraube verläuft, die in ein Gewinde des Gehäuses eingeschraubt ist.

Das Übungssystem kann vorteilhaft, insbesondere an der Oberseite des Gehäuses, einen Tragegriff aufweisen. Der Tragegriff kann vorteilhaft insbesondere derart angeordnet sein, dass das Übungssystem wie ein Koffer getragen werden kann.

Vorzugsweise weist das Übungssystem ein Netzanschlusselement zum Anschließen an ein elektrisches Stromnetz, insbesondere an ein 230V-Stromnetz, auf. Das Netzanschlusselement kann beispielsweise als ein Anschlusskabel mit einem Netzstecker oder als eine Kaltgerätebuchse zum Einstecken eines Netzanschlusskabels ausgebildet sein.

Bei einer besonderen, vorteilhaften Ausführung weist die Platte wenigstens zwei von der Bedienseite aus zugängliche Netzspannungs-Steckbuchsen auf, an denen eine Versorgungsnetzspannung, insbesondere eine Wechselspannung von 110V oder 220V oder 230 V oder 240 V, anliegt, insbesondere bei einer Wechselspannungsfrequenz von 50 Hz. Die Netzspannungs- Versorgungssteckbuchsen dienen für den Übenden als Spannungsquelle, insbesondere Wechselspannungsquelle, die er in seine Schaltungsanordnung durch ein einfaches Einstecken von Kabelsteckern einbinden kann. Vorzugsweise weist das Übungssystem einen Netzspannungs-Kontrollschalter auf, mittels dem zumindest die an den Netzspannungs-Versorgungssteckbuchsen anliegende Versorgungsspannung ein- und ausgeschaltet werden kann.

Hinsichtlich der Art der Netzspannung gibt es keine grundsätzlichen Beschränkungen.

Insbesondere kann das Übungssystem an das länderspezifische Stromnetz angepasst sein. Bei einer besonders sicheren Ausführung ist zwischen das Netzanschlusselement und wenigstens eine der Netzspannungs-Versorgungssteckbuchsen eine Systemsicherung und/oder ein Notausschalter geschaltet.

In vorderster Weise kann vorgesehen sein, dass die Platte wenigstens zwei von der Bedienseite aus zugängliche Niederspannungs-Versorgungssteckbuchsen aufweist, an denen eine Gleichspannung, insbesondere einen Gleichspannung im Bereich von 1V bis 50 V, insbesondere von 12 V, anliegt. Die Niederspannungs- Versorgungssteckbuchsen dienen für den Übenden als Niederspannungsquelle, insbesondere Gleichspannungsquelle, die er in seine Schaltungsanordnung durch ein einfaches Einstecken von Kabelsteckern einbinden kann. Vorzugsweise weist das Übungssystem einen Niederspannungs-Kontrollschalter auf, mittels dem zumindest die an den Niederspannungs-Versorgungssteckbuchsen anliegende Versorgungsspannung ein- und ausgeschaltet werden kann.

Das Übungssystem kann wenigstens einen Transformator aufweisen, der die Gleichspannung bereitstellt. Zwischen wenigstens eine der Niederspannungs-Versorgungssteckbuchsen und den Transformator kann eine Niederspannungs-Systemsicherung und/oder eine Feinsicherung geschaltet sein. Auf diese Weise ist sichergestellt, dass es bei fehlerhaften Schaltungsanordnungen nicht zu Beschädigungen des Übungssystems und insbesondere nicht zu Beschädigungen des Transformators kommt. Das Gehäuse der Feinsicherung kann vorteilhaft von der Bedienseite aus zugänglich sein, so dass der Übende auch üben kann, die Feinsicherung zu ersetzen, wenn diese durchgeschmolzen ist.

In vorderster Weise kann wenigstens eine der elektrischen Funktionseinheiten als eine bei Wohnhausinstallationen übliche Funktionseinheit ausgebildet sein. Insbesondere können mehrere oder alle der elektrischen Funktionseinheiten als bei Wohnhausinstallationen übliche Funktionseinheiten ausgebildet sein. Ein solches Übungssystem kann insbesondere zur Ausbildung hinsichtlich der Installation und Verschaltung von elektrischen Funktionseinheiten in einem Gebäude verwendet werden.

Beispielsweise kann wenigstens eine der elektrischen Funktionseinheiten als Schalter, insbesondere als Wechselschalter, Kreuzschalter, Serienschalter, Doppelwechselschalter oder Taster, ausgebildet sein. Eine solche Ausführung ermöglicht es insbesondere Schaltungsanordnungen aufzubauen, wie sie in einem Gebäude beispielsweise bei Beleuchtungsanwendungen vorkommen.

Alternativ oder zusätzlich kann vorteilhaft vorgesehen sein, dass wenigstens eine der elektrischen Funktionseinheiten als Relais; insbesondere als Relais mit Selbsthaltung, ausgebildet ist.

Alternativ oder zusätzlich kann wenigstens eine der elektrischen Funktionseinheiten als Zeitrelais, insbesondere als Zeitrelais mit Öffnungsfunktion oder als Zeitrelais mit Schließfunktion, ausgebildet sein. Eine solche Ausführung ermöglicht es insbesondere Schaltungsanordnungen aufzubauen, wie sie beispielsweise bei einer Treppenhausbeleuchtung vorkommen, bei der nach Ablauf einer vorgegebenen oder vorgebbaren Zeitspanne das Licht automatisch wieder ausgeht.

Alternativ oder zusätzlich kann wenigstens eine der elektrischen Funktionseinheiten als Summer oder als eine Kombination aus einem Summer und einer Lampe (Summer mit Lichtfunktion) ausgebildet sein. Auf diese Weise können Schaltungsanordnungen realisiert werden, wie sie beispielsweise bei der Installation einer Klingel in einem Wohnhaus vorkommen.

Alternativ oder zusätzlich kann wenigstens eine der elektrischen Funktionseinheiten als Leuchte, insbesondere als Kontrollleuchte, ausgebildet sein. Eine solche Ausführung ermöglicht es insbesondere Schaltungsanordnungen aufzubauen, wie sie in einem Gebäude beispielsweise bei Beleuchtungsanwendungen vorkommen.

Ganz allgemein kann vorteilhaft vorgesehen sein, dass das Übungssystem wenigstens eine elektrische Funktionseinheit aufweist, die zum Betrieb mit einer Niederspannung (insbesondere mit 12 V Gleichspannung) ausgelegt ist. Diese elektrische Funktionseinheit kann vorteilhaft an von der an Bedienseite aus zugängliche Niederspannungssteckbuchsen angeschlossen sein, über die die elektrische Funktionseinheit in eine Schaltungsanordnung eingebunden werden kann.

Ganz allgemein kann alternativ oder zusätzlich vorteilhaft vorgesehen sein, dass das Übungssystem wenigstens eine elektrische Funktionseinheit aufweist, die zum Betrieb mit einer Netzspannung (insbesondere einer 230V Wechselspannung bei einer Netzfrequenz von 50 Hz) ausgelegt ist. Diese elektrische Funktionseinheit kann vorteilhaft an von der an Bedienseite aus zugängliche Netzspannungs-Steckbuchsen angeschlossen sein, über die die elektrische Funktionseinheit in eine Schaltungsanordnung eingebunden werden kann.

Bei einer ganz besonders vorteilhaften Ausführung unterscheiden sich die Niederspannungssteckbuchsen von den Netzspannungs-Steckbuchsen derart, dass ein in eine Niederspannungssteckbuchse einsteckbarer Niederspannungsstecker nicht in eine Netzspannungs-Steckbuchse einsteckbar ist. Insbesondere kann vorteilhaft vorgesehen sein, dass sich die Niederspannungssteckbuchsen von den Netzspannungs-Steckbuchsen derart unterscheiden, dass ein in eine Netzspannungs-Steckbuchse einsteckbarer Netzstecker nicht in eine Netzspannungs- Niederspannungssteckbuchse einsteckbar ist. Ein solches System ist besonders sicher, weil gewährleistet ist, dass die für Niederspannung vorgesehenen elektrischen Funktionseinheiten nicht versehentlich an eine Netzspannung (beispielsweise 230V Wechselspannung) angeschlossen werden und die für Netzspannung (beispielsweise 230V Wechselspannung) vorgesehenen elektrischen Funktionseinheiten nicht versehentlich an die Niederspannung (beispielsweise 12 V Gleichspannung) angeschlossen werden.

Beispielsweise kann vorteilhaft vorgesehen sein, dass sich die Niederspannungssteckbuchsen von den Netzspannungs-Steckbuchsen hinsichtlich Form und/oder Größe derart unterscheiden, dass ein in eine Niederspannungssteckbuchse einsteckbarer Niederspannungsstecker nicht in eine Netzspannungs-Steckbuchse einsteckbar ist, und dass sich die Niederspannungssteckbuchsen von den Netzspannungs-Steckbuchsen hinsichtlich Form und/oder Größe derart unterscheiden, dass ein in eine Netzspannungs-Steckbuchse einsteckbarer Netzstecker nicht in eine Netzspannungs- Niederspannungssteckbuchse einsteckbar ist.

Das Übungssystem weist vorzugsweise mehrere (insbesondere einadrige) Kabel aufweist, die endseitig mit in die Steckbuchsen einsteckbaren Steckern versehen sind. Die Stecker können insbesondere als Bananenstecker und/oder Federstecker und/oder Lamellenstecker ausgebildet sein. Insbesondere kann vorteilhaft vorgesehen sein, dass das Übungssystem mehrere (insbesondere einadrige) Kabel aufweist, die endseitig mit in die Niederspannungs-Steckbuchsen einsteckbaren Steckern versehen sind. Alternativ oder zusätzlich kann vorteilhaft vorgesehen sein, dass das Übungssystem mehrere (insbesondere einadrige) Kabel aufweist, die endseitig mit in die Netzspannungs-Steckbuchsen einsteckbaren Steckern versehen sind.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: schematisch ein Ausführungsbeispiel eines erfindungsgemäßen Übungssystems von vorne,
- Fig. 2: schematisch das Ausführungsbeispiel in einer Seitenansicht,
- Fig. 3: schematisch das Ausführungsbeispiel in einer Querschnittsdarstellung,
- Fig. 4: schematisch ein Ausführungsbeispiel eines erfindungsgemäßen Übungssystems mit einer zu Übungszwecken aufgebauten Schaltungsanordnung, und
- Fig.5: einen Schaltplan bezüglich der Bereitstellung der Netz-Versorgungsspannung an den Netzspannungs-Versorgungssteckbuchsen und der Niederspannung an den Niederspannungs-Versorgungs-Steckbuchsen.

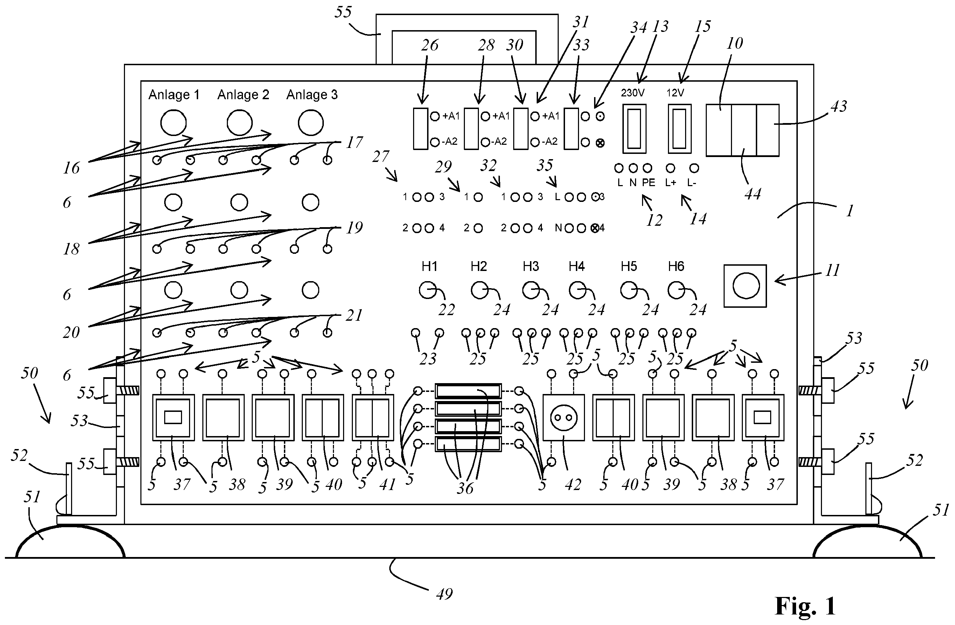

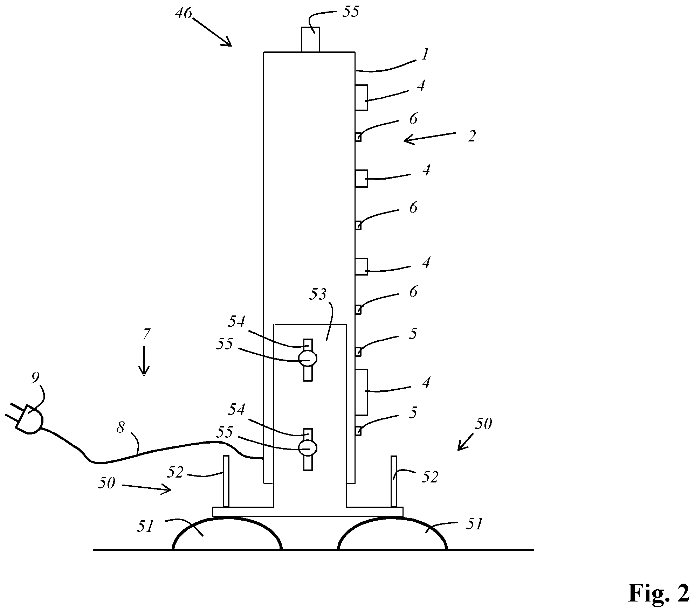

Fig. 1 zeigt schematisch ein Ausführungsbeispiel eines erfindungsgemäßen Übungssystems zum Aufbauen und Ausprobieren elektrischer Schaltungsanordnungen. Das Übungssystem weist eine Platte 1 auf, die eine Bedienseite 2 und eine (in den Figuren 1 und 2 nicht sichtbare) Montageseite 3 aufweist. Die Platte 1 trägt mehrere elektrische Funktionseinheiten 4, insbesondere in Form von Schaltern oder Tastern oder Relais, und mehrere Steckbuchsen, nämlich Niederspannungs-Steckbuchsen 5, insbesondere in Form von Niederspannungs-Versorgungs-Steckbuchsen oder Niederspannungs-Kontrollleuchten-Steckbuchsen oder Niederspannungs-Taster-Steckbuchsen, und (insbesondere 230V-Wechselstrom-)Netzspannungs-Steckbuchsen 6, insbesondere in Form von Netzspannungs-Versorgungssteckbuchsen oder Netzspannungs-Kontrollleuchten-Steckbuchsen oder Netzspannungs-Schalter-Steckbuchsen. Der besseren Übersichtlichkeit sind in der Figur die Bezugszeichen 4, 6 und 6 im Einzelfall weggelassen, wenn das betreffende Bauteil eine spezielle Ausführung einer elektrische Funktionseinheit, einer Niederspannungs-Steckbuchsen oder einer Netzspannungs-Steckbuchse ist, die bereits mit einem hierfür spezifischen Bezugszeichen versehen ist.

Die elektrischen Funktionseinheiten 4 sind von der Bedienseite 2 aus sichtbar und/oder bedienbar angeordnet. In die Steckbuchsen 4 können von der Bedienseite 2 aus (nicht dargestellte), vorzugsweise einpolige, Stecker, die insbesondere jeweils an den Enden von Kabeln 58 angeordnet sein können, eingesteckt werden. Die Stecker können beispielsweise als Bananenstecker und/oder Federstecker und/oder Lamellenstecker ausgebildet sein. Jeder Funktionseinheit 4 sind wenigstens zwei Steckbuchsen 5, 6 zugeordnet, die auf der Montageseite 3 an die jeweilige Funktionseinheit 4 elektrisch mittels (nicht dargestellten Montageleitungen) angeschlossen sind. Auf diese Weise ist es ermöglicht, dass ein Übender eine Funktionseinheit in eine Schaltungsanordnung einbinden kann, indem er die zu der aufzubauenden Schaltungsanordnung gehörenden elektrischen Funktionseinheiten 4 durch Einstecken der Stecker von Kabeln 58 in die zugehörigen Steckbuchsen 5, 6, verbindet.

Jede der elektrischen Funktionseinheiten 4 weist eine Bedien- und/oder Anzeigenseite auf, die auf der in Figur 1 sichtbaren Bedienseite 2 der Platte 1 angeordnet ist. Auf diese Weise ist es ermöglicht, dass der Übende die Funktionseinheiten 4 sehen und bedienen kann. Beispielsweise ist es dem Übenden möglich, eine als Schalter ausgebildete Funktionseinheit, den er durch Einstecken von Kabelstecken in die dem Schalter zugeordneten Steckbuchsen 5, 6, in seine Schaltungsanordnung eingebunden hat, von der Bedienseite aus zu betätigen. Bei dem Schalter kann es sich beispielsweise um einen Lichtschalter handeln, wie er üblicherweise in Wohnräumen, insbesondere in Unterputzbauweise, eingebaut wird.

Die elektrischen Funktionseinheiten 4 weisen auch eine Anschlussseite auf, die jedoch vorteilhaft auf der Montageseite 3 angeordnet ist und daher für den Übenden nicht zugänglich ist. Insbesondere sind die elektrischen Anschlusskontakte der elektrischen Funktionseinheiten 4 für den Übenden nicht unmittelbar zugänglich. Auf diese Weise ist vorteilhaft erreicht, dass der Übende das Übungssystem nicht manipulieren und auch nicht beschädigen kann. Der Übende kann lediglich die Funktionseinheiten 4 dadurch in seine Schaltanordnung einbinden, dass er die Stecker von Kabeln in die jeweils der Funktionseinheit zugeordneten Steckbuchsen einsteckt. Er kann jedoch die Installation der Funktionseinheiten 4 vorteilhafter Weise nicht manipulieren.

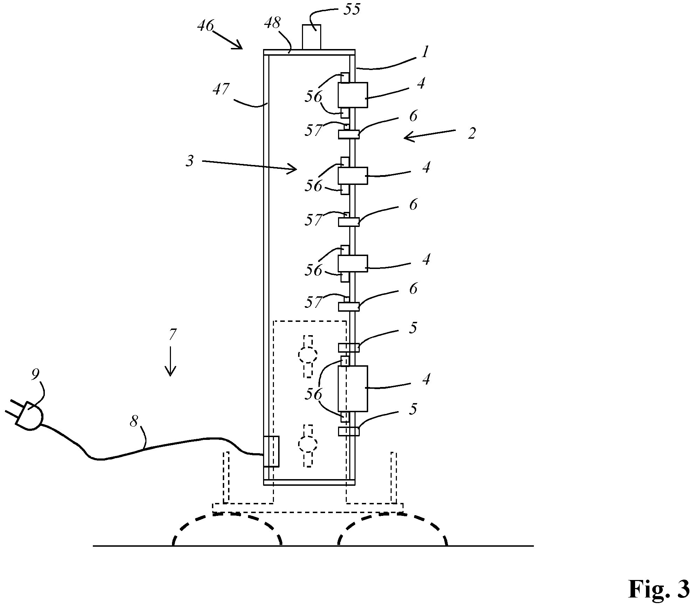

Die elektrischen Funktionseinheiten 4 sind mittels (in Figur 3 schematisch dargestellten) Befestigungsmitteln 56 auf der Montageseite 3 an der Platte 1 befestigt. Da die Montageseite 3 (was weiter unten noch ausführlich erläutert ist) für den Übenden unzugänglich ist, kann der Übende die elektrischen Funktionseinheiten 4 nicht eigenständig demontieren. Gleiches gilt analog für die Steckbuchsen 5, 6, die mit weiteren Befestigungsmitteln 57 auf der Montageseite 3 an der Platte 1 befestigt sind.

Wie in den Figuren 2 und 3 zu sehen ist, weist das Übungssystem ein Netzanschlusselement 7, nämlich ein Anschlusskabel 8 mit einem Netzstecker 9 auf, mittels dem das Übungssystem an ein öffentliches Stromnetz, insbesondere an ein 230V-Stromnetz, angeschlossen werden kann. Es ist eine Systemsicherung, nämlich ein Systemsicherungsautomat 10, vorhanden, die beispielsweise als Fehlerstrom-Leitungsschutzschalter B16A ausgebildet sein kann, und über die das Übungssystem abgesichert ist. Dies hat den besonderen Vorteil, dass die Spannungsversorgung des Übungssystems unmittelbar automatisch abgeschaltet wird, wenn der Übende versehentlich eine Schaltungsanordnung aufbauen sollte, die fehlerhaft ist. Auf diese Weise ist wirkungsvoll vermieden, dass das Übungssystem beschädigt wird und dass eine in dem öffentlichen Netzstromkreis, an dem das Übungssystem angeschlossen ist, angeordnete Sicherung reagiert oder der öffentliche Netzstromkreis, beispielsweise durch einen Kurzschluss, beschädigt wird. Darüber hinaus ist mittels die Systemsicherung 10 vorteilhaft vermieden, dass der Übende einem elektrischen Stromschlag ausgesetzt wird, wenn er Fehler macht.

Das Übungssystem weist einen Notausschalter 11 auf, mittels dem das Übungssystem insgesamt schnell von der Netzspannung getrennt werden kann. Der Notausschalter weist vorzugsweise einen farblich (insbesondere rot) hervorgehobenen Bedienknopf auf, auf den zum Ausschalten der Netzspannungsversorgung notfalls geschlagen werden kann. Insbesondere kann der Notausschalter 11 derart ausgebildet sein, dass er nach einer Betätigung ausschließlich nur mit Hilfe eines Schlüssels zurück in die Einschaltstellung überführt werden kann. Auf diese Weise ist es beispielsweise ermöglicht, dass ausschließlich der Ausbilder das Übungssystem wieder einschalten kann, nachdem er überprüft hat, dass die von den Übenden aufgebaute Schaltungsanordnung fehlerfrei ist.

Das Übungssystem weist von der Bedienseite 1 aus zugängliche Netzspannungs-Versorgungssteckbuchsen 12 auf, an denen eine Netz-Versorgungsspannung, beispielsweise von 230V, anliegt. Konkret ist eine Netzspannungs-Versorgungs-Steckbuchse 12 vorhanden, an der die Phase anliegt und die mit ʺL" bezeichnet ist. Darüber hinaus ist eine weitere Netzspannungs-Versorgungssteckbuchse 12 vorhanden, die an den Neutralleiter angeschlossen ist und die mit "N" bezeichnet ist. Darüber hinaus ist eine weitere Netzspannungs-Versorgungssteckbuchse 12 vorhanden, die permanent geerdet ist und die mit "PE" bezeichnet ist.

Das Übungssystem weist außerdem einen Transformator 43 auf, der die an den Niederspannungs-Versorgungssteckbuchsen 14 anliegende Niederspannung bereitstellt. Zwischen wenigstens eine der Niederspannungs-Versorgungssteckbuchsen 14 und den Transformator 43 ist eine 12V-Systemsicherung 44 sowie eine Feinsicherung 45 geschaltet. Auf diese Weise ist sichergestellt, dass es bei fehlerhaften Schaltungsanordnungen nicht zu Beschädigungen des Übungssystems und insbesondere nicht zu Beschädigungen des Transformators 43 kommt. Das Gehäuse der Feinsicherung 45 ist von der Bedienseite 2 aus zugänglich, so dass der Übende auch üben kann, die Feinsicherung 45 im Bedarfsfall zu ersetzen.

Das Übungssystem weist einen Netzspannungs-Kontrollschalter 13 auf, mittels dem zumindest die an der Netzspannungs-Versorgungssteckbuchse 12, die mit "L" bezeichnet ist, anliegende Versorgungsspannung ein- und ausgeschaltet werden kann.

Die Platte 1 weist von der Bedienseite 2 aus zugängliche Niederspannungs-Versorgungssteckbuchsen 14 auf, an denen eine Gleichspannung, insbesondere eine Gleichspannung im Bereich von 1 V bis 50 V, vorzugsweise von 12 V, anliegt. Darüber hinaus ist ein Niederspannungs-Kontrollschalter 15 vorhanden, mittels dem die an den Niederspannungs-Versorgungs-Steckbuchsen 14 anliegende Spannung ein- und ausgeschaltet werden kann.

Der Übende hat in vorteilhafter Weise die Möglichkeit, seine Schaltungsanordnung bei ausgeschaltetem Netzspannungs-Kontrollschalter 13 und ausgeschaltetem Niederspannungskontrollschaler 15 zunächst aufzubauen, wobei er sicher sein kann, dass sämtliche elektrischen Funktionselemente 4 spannungsfrei bleiben. Anschließend kann er durch Einschalten des Netzspannungskontrollschalters 13 und/oder des Niederspannungs-Kontrollschalters 15 seine Schaltungsanordnung elektrisch anschließen und ausprobieren.

Das Übungssystem weist Niederspannungs-Kotrollleuchten 16 auf, die über zugeordnete Niederspannungs-Kontrollleuchten-Steckbuchsen 17 in eine Schaltungsanordnung eingebunden werden können.

Das Übungssystem weist außerdem Niederspannungs-Taster 18 auf, die über Niederspannungs-Taster-Steckbuchsen 19 in eine Schaltungsanordnung eingebunden werden können.

Das Übungssystem weist außerdem weitere Niederspannungs-Taster 20 auf, die sich farblich von den Niederspannungs-Tastern 18 unterscheiden und die über zugeordnete weitere Niederspannungs-Taster-Steckbuchsen 21 in eine Schaltungsanordnung eingebunden werden können.

Das Übungssystem weist außerdem eine Niederspannungs-LED-Kontrollleuchte 22 auf, die mit H1 bezeichnet ist und die über Niederspannungs-LED-Kontrollleuchten-Steckbuchsen 23 in eine Schaltungsanordnung eingebunden werden kann. Darüber hinaus sind weitere LED-Kontrollleuchten 24 vorhanden, die mit Netzspannung (beispielsweise 230V) betrieben werden können und die über zugeordnete Netzspannungs-Kontrollleuchten-Steckbuchsen 25 in eine Schaltungsanordnung eingebunden werden können.

Das Übungssystem weist ein erstes Relais 26 auf, das zum Anschluss (über die Niederspannungssteckbuchsen +A1 und -A2) an einen Niederspannungs-Steuerstromkreis der aufzubauenden Schaltungsanordnung anschließbar ist und das über Relais-Netzspannungs-Steckbuchsen 27 in einen Laststromkreis der aufzubauenden Schaltungsanordnung eingebunden werden kann.

Das Übungssystem weist außerdem ein zweites Relais 28 auf, das über Relais-Netzspannungs-Steckbuchsen in einen (vorzugsweise 230V-) Wechselstrom-Netzspannungs-Steuerstromkreis der aufzubauenden Schaltungsanordnung eingebunden werden kann. Das zweite Relais 28 kann über weitere Relais-Netzspannungs-Steckbuchsen 29 in den Laststromkreis einer Schaltungsanordnung eingebunden werden.

Das Übungssystem weist außerdem ein drittes Relais 30 mit einer Selbsthaltefunktion auf, das über Wechselstrom-Relais-Netzspannungs-Steckbuchsen 31 in einen Wechselstrom-Steuerstromkreis (insbesondere 230V) einer Schaltungsanordnung und über Relais-Netzspannungs-Steckbuchsen 32 in einen Laststromkreis der Schaltungsanordnung eingebunden werden kann.

Das Übungssystem weist außerdem eine Treppenhaus-Zeitschaltuhr 33 auf, die über Treppenhaus-Zeitschaltuhr-Steckbuchsen 34 in einen Steuerstromkreis einer aufzubauenden Schaltungsanordnung eingebunden werden kann und die über Treppenhaus-Zeitschaltuhr-Netzspannungssteckbuchsen 35 in einen Laststromkreis der Schaltungsanordnung eingebunden werden kann.

Das Übungssystem weist außerdem mehrere Klingeltaster 36 auf, die jeweils über zwei Netzspannungs-Steckbuchsen 6 in eine Schaltungsanordnung eingebunden werden können.

Das Übungssystem weist außerdem zwei Aus-Kontroll-Wechselschalter 37 auf. Darüber hinaus weist das System zwei Taster 38 auf. Desweiteren weist das System zwei Kreuzschalter 39 auf. Desweiteren weist das System einen Serienschalter 40 mit zwei Schaltwippen auf. Darüber hinaus weist das System einen Doppelwechselschalter 41 mit zwei Schaltwippen auf. Darüber hinaus weist das System eine (insbesondere hausinstallationsübliche) Schutzkontakt-Steckdose 42 auf.

Die Niederspannungs-Steckbuchsen 5 unterscheiden sich von den Netzspannungs-Steckbuchsen 6 derart, dass ein in eine Niederspannungs-Steckbuchse 5 einsteckbarer Niederspannungsstecker nicht in eine Netzspannungs-Steckbuchse 6 einsteckbar ist, und umgekehrt. Hierdurch ist das Übungssystem besonders sicher, weil gewährleistet ist, dass die für Niederspannung vorgesehenen elektrischen Funktionseinheiten 4 nicht versehentlich an eine Netzspannung (beispielsweise 230V Wechselspannung) angeschlossen werden und die für Netzspannung (beispielsweise 230V Wechselspannung) vorgesehenen elektrischen Funktionseinheiten 4 nicht versehentlich an die Niederspannung (beispielsweise 12 V Gleichspannung) angeschlossen werden.

Die Platte 1 kann vorteilhaft als Metallplatte, insbesondere als gebürstete Stahlplatte, ausgebildet sein. Eine solche Ausführung ist besonders robust.

Wie insbesondere die Figur 3 zeigt, ist die Platte 1 Teil eines Gehäuses 46, wobei die Bedienseite 2 auf der Außenseite des Gehäuses 46 angeordnet ist und wobei die Montageseite 3 im Gehäuseinneren angeordnet ist. Das Gehäuse 46 weist eine der Platte 1 gegenüberliegende Rückwand 47 auf, die vorzugsweise durchsichtig ausgebildet ist. Auf diese Weise ist vorteilhaft erreicht, dass die Übenden sehen können, wie die elektrischen Funktionseinheiten 4 innerhalb des Übungssystems an die Steckbuchsen 5, 6 und/oder an andere Baueinheiten des Übungssystems angeschlossen sind. Dies ermöglichst es insbesondere, dass die Übenden nicht nur Schaltungsanordnungen aufbauen und ausprobieren können, sondern darüber hinaus auch, dass die Übenden sehen können, wie die für die Schaltungsanordnung verwendeten elektrischen Funktionseinheiten 4 aufgebaut sind und wie diese bei einer Installation angeschlossen werden. Dennoch hat das Übungssystem den ganz besonderen Vorteil, dass die elektrischen Funktionseinheiten 4 innerhalb des Gehäuses 46 geschützt sind und insoweit von den Übenden nicht manipuliert werden können. Dies hat den ganz besonderen Vorteil, dass die Übenden vor einem Stromschlag geschützt sind und darüber hinaus den Vorteil, dass das Übungssystem vor einer Beschädigung geschützt ist.

Das Gehäuse 46 kann einen umlaufenden vierseitigen Rahmen 48 aufweisen, in den auf der einen Seite die Platte 1 und auf der anderen Seite die Rückwand 47 eingesetzt ist. Eine solche Ausführung ist ganz besonders robust.

Das Übungssystem ist dazu ausgebildet und bestimmt, auf einer horizontalen Aufstellfläche 49 derart aufgestellt zu werden, dass die Platte 1 vertikal ausgerichtet ist. Dies ermöglicht eine ergonomisch vorteilhafte Haltung der Übenden beim Aufbauen von Schaltungsanordnungen. Insbesondere ist auf diese Weise vermieden, dass sich die Übenden nach vorne überbeugen müssen, um Schaltungsanordnungen aufzubauen.

Das Übungssystem weist mehrere Aufstell-Befestigungsmittel 50 auf, mittels denen das Übungssystem, insbesondere zerstörungsfrei wieder lösbar, an der Aufstellfläche 49 befestigt werden kann. Im dargestellten Ausführungsbeispiel weisen die Aufstell-Befestigungsmittel 50 mehrere Saugnäpfe 51 auf, die jeweils mittels eines Umschalthebels 52 wahlweise in eine Saugstellung (in der das Übungssystem an der Aufstellfläche 49 festgelegt ist) oder in eine Freigabestellung (in der das Übungssystem nicht an der Aufstellfläche 49 festgelegt ist) überführt werden können. Die Saugnäpfe 51 können ähnlich ausgebildet sein, wie die Saugnäpfe von Saughaltern, die man zum Transport von Glasscheiben verwendet. Jeweils zwei Saugnäpfe 51 sind an einem Träger 53 befestigt, der Langlöcher 54 aufweist. Durch die Langlöcher 54 sind Befestigungsschrauben 55 geführt, die in das Gehäuse 46 eingeschraubt sind. Auf diese Weise ist der Träger 53 samt den an ihm befestigten Aufstell-Befestigungsmitteln 50 verstellbar an dem Gehäuse 46 befestigt bzw. befestigbar. Durch die Langlöcher 54 ist es ermöglicht, die Aufstellposition des Gehäuses 46 hinsichtlich der Aufstellhöhe relativ zu der Aufstellfläche 49 zu variieren. Insgesamt gibt es zwei Träger 53, die an den seitlichen Stirnseiten angeschraubt sind und an denen jeweils zwei nach vorne und hinten über das Gehäuse 46 hinaus ragende Saugnäpfe 51 befestigt sind.

An der Oberseite des Gehäuses 46 ist ein Handgriff 55 befestigt, der es ermöglicht, dass gesamte Übungssystem wie einen Koffer zu tragen.

Das Gehäuse 46 kann vorteilhaft beispielsweise eine Länge von 100 cm, eine Höhe von 60 cm und eine Tiefe von 12 cm aufweisen.

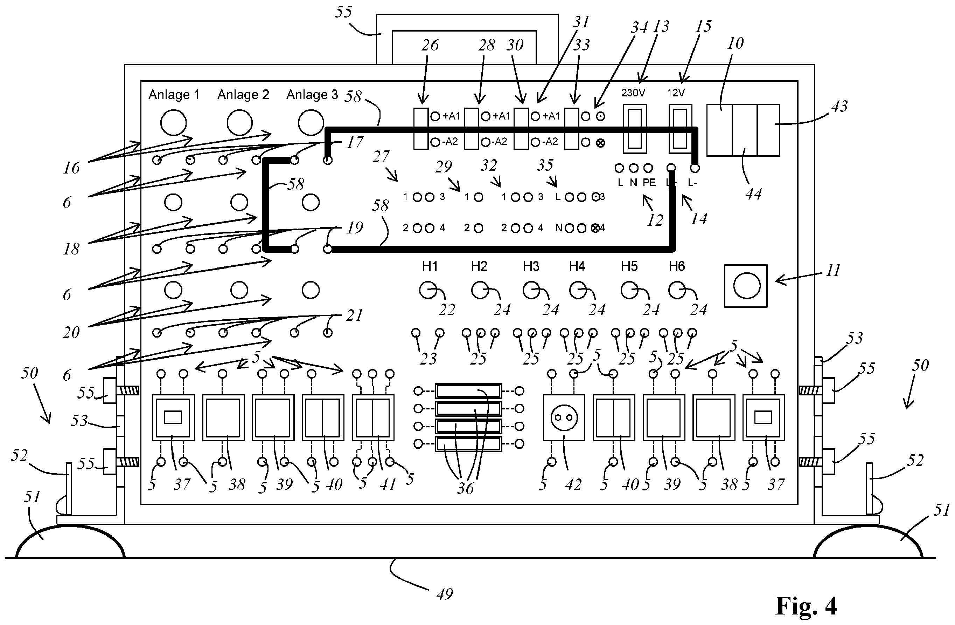

Figur 4 zeigt ein Ausführungsbeispiel des erfindungsgemäßen Übungssystems, bei dem exemplarisch eine ganz einfache Schaltungsanordnung realisiert ist, in die die Niederspannungs-Versorgungs-Steckbuchsen 14, der Niederspannungs-Taster 18 und die Niederspannungs-Kontrollleuchte 16 eingebunden sind, indem die Niederspannungs-Steckbuchsen 17, 19 sowie die Niederspannungs-Versorgungs-Steckbuchsen 14 mittels Kabeln 58, die endseitig passende Niederspannungs-Stecker aufweisen, elektrisch verbunden worden sind.

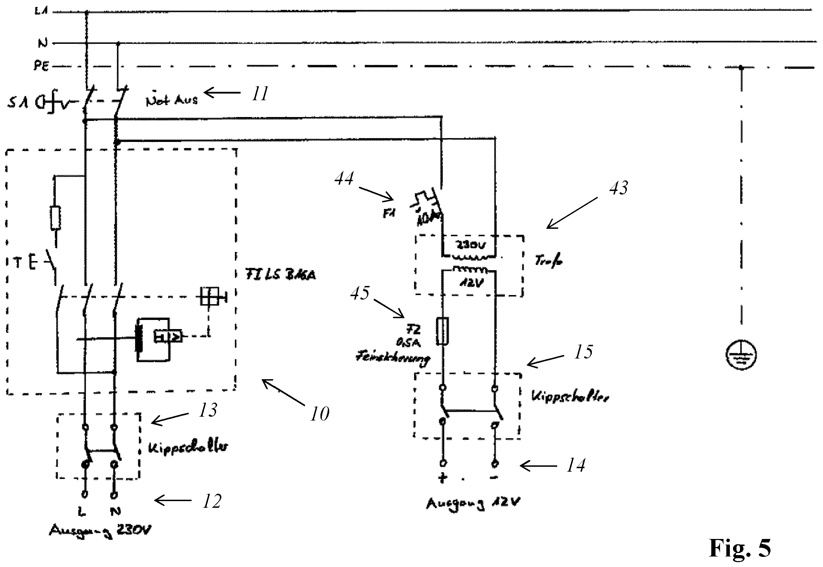

Figur 5 zeigt den Schaltplan bezüglich der Bereitstellung der Netzspannung-Versorgungsspannung an den Netzspannungs-Versorgungssteckbuchsen 12 und einer Niederspannung an den Niederspannungs-Versorgungs-Steckbuchsen 14. Die Erfindung ist jedoch nicht auf diese beispielhafte Schaltung beschränkt. Vielmehr ist es möglich, andere Komponenten einzubauen und/oder eine andere Verschaltung zu wählen. Beispielsweise ist auch die Verwendung eines Schaltnetzteils anstelle des Transformators 43 möglich. Es ist beispielsweise auch möglich andere Arten von Sicherungen und/oder Schaltern zu verwenden.

### Bezugszeichenliste:

- 1: Platte
- 2: Bedienseite
- 3: Montageseite
- 4: elektrische Funktionseinheit
- 5: Niederspannungs-Steckbuchse
- 6: Netzspannungs-Steckbuchse
- 7: Netzanschlusselement
- 8: Anschlusskabel
- 9: Netzstecker
- 10: Systemsicherungsautomat
- 11: Notausschalter
- 12: Netzspannungs-Versorgungssteckbuchse
- 13: Netzspannungs-Kontrollschalter
- 14: Niederspannungs-Versorgungs-Steckbuchsen
- 15: Niederspannungskontrollschaler
- 16: Niederspannungs-Kotrollleuchten
- 17: Niederspannungs-Kontrollleuchten-Steckbuchsen
- 18: Niederspannungs-Taster
- 19: Niederspannungs-Taster-Steckbuchse
- 20: weiterer Niederspannungs-Taster
- 21: Niederspannungs-Taster-Steckbuchse
- 22: Niederspannungs-LED-Kontrollleuchte
- 23: Niederspannungs-LED-Kontrollleuchten-Steckbuchsen
- 24: weitere LED-Kontrollleuchten
- 25: Netzspannungs-Kontrollleuchten-Steckbuchsen
- 26: erstes Relais
- 27: Relais-Netzspannungs-Steckbuchsen
- 28: zweites Relais
- 29: Relais-Netzspannungs-Steckbuchsen
- 30: drittes Relais
- 31: Wechselstrom-Relais-Netzspannungs-Steckbuchsen
- 32: Relais-Netzspannungs-Steckbuchsen
- 33: Treppenhaus-Zeitschaltuhr
- 34: Treppenhaus-Zeitschaltuhr-Steckbuchsen
- 35: Treppenhaus-Zeitschaltuhr-Netzspannungssteckbuchsen
- 36: Klingeltaster
- 37: Aus-Kontroll-Wechselschalter
- 38: Taster
- 39: Kreuzschalter
- 40: Schaltwippen
- 41: Doppelwechselschalter
- 42: Schutzkontakt-Steckdose
- 43: Transformator
- 44: 12V-Systemsicherung
- 45: Feinsicherung
- 46: Gehäuse
- 47: Rückwand
- 48: Rahmen
- 49: Aufstellfläche
- 50: Aufstell-Befestigungsmittel
- 51: Saugnapf
- 52: Umschalthebel
- 53: Träger
- 54: Langloch
- 55: Befestigungsschraube
- 56: Befestigungsmittel
- 57: weitere Befestigungsmittel
- 58: Kabel

## Patentansprüche

1. Übungssystem zum Aufbauen und Ausprobieren elektrischer Schaltungsanordnungen, aufweisend eine Platte, die eine Bedienseite und eine Montageseite aufweist und die mehrere elektrische Funktionseinheiten und mehrere Steckbuchsen trägt, wobei die elektrischen Funktionseinheiten von der Bedienseite aus sichtbar und/oder bedienbar angeordnet sind und wobei in die Steckbuchsen von der Bedienseite aus Stecker einsteckbar sind, und wobei jeder Funktionseinheit wenigstens zwei Steckbuchsen zugeordnet sind, die auf der Montageseite an die jeweilige Funktionseinheit elektrisch angeschlossen sind.

2. Übungssystem nach Anspruch 1, **dadurch gekennzeichnet, dass**
a. die Funktionseinheiten ausschließlich von der Montageseite aus demontierbar, insbesondere zerstörungsfrei demontierbar, sind, und/oder dass
b. Befestigungsmittel vorhanden sind, mittels denen die Funktionseinheiten an der Platte befestigt sind, wobei die Befestigungsmittel ausschließlich auf der Montageseite angeordnet sind und/oder von der Montageseite aus zugänglich sind.

3. Übungssystem nach Anspruch 1 oder 2, **dadurch gekennzeichnet, dass**
a. wenigstens eine der elektrischen Funktionseinheiten, insbesondere jede der elektrischen Funktionseinheiten, eine Bedien- und/oder Anzeigeseite aufweist, die auf der Bedienseite der Platte angeordnet ist, und/oder dass
b. wenigstens eine der elektrischen Funktionseinheiten, insbesondere jede der elektrischen Funktionseinheiten, eine Anschlussseite aufweist, die auf der Montageseite der Platte angeordnet ist, und/oder dass
c. die Platte Teil eines Gehäuses des Übungssystems ist, wobei die Bedienseite auf der Außenseite des Gehäuses angeordnet ist und wobei die Montageseite im Gehäuseinneren angeordnet ist, und/oder dass
d. die Platte Teil eines Gehäuses des Übungssystems ist, wobei die Bedienseite auf der Außenseite des Gehäuses angeordnet ist und wobei die Montageseite im Gehäuseinneren angeordnet ist und wobei das Gehäuse eine der Platte gegenüberliegende, insbesondere durchsichtige, Rückwand aufweist.

4. Übungssystem nach einem der Ansprüche 1 bis 3, **dadurch gekennzeichnet, dass**
a. das Übungssystem dazu ausgebildet und bestimmt ist, auf einer horizontalen Aufstellfläche, insbesondere auf einer Tischplatte, derart aufgestellt zu werden, dass die die Platte vertikal ausgerichtet ist, und/oder dass
b. das Übungssystem wenigstens ein Aufstell-Befestigungsmittel aufweist, mittels dem das Übungssystem, insbesondere zerstörungsfrei wieder lösbar, an einer, insbesondere horizontalen, Aufstellfläche befestigbar ist, und/oder dass
c. das Aufstell-Befestigungsmittel wenigstens einen Saugnapf und/oder wenigstens einen Saughalter aufweist, und/oder dass
d. der Saugnapf, beispielsweise mit einem Umschalthebel, wahlweise zwischen einem Befestigungszustand und einem Freigabezustand umschaltbar ist, und/oder dass
e. das Aufstell-Befestigungsmittel außen an dem Gehäuse befestigt ist, und/oder dass
f. die Relativposition des Aufstell-Befestigungsmittels relativ zu dem Gehäuse veränderbar ist, und/oder dass
g. das Aufstell-Befestigungsmittel einen Träger aufweist, der einerseits an dem Gehäuse befestigt ist oder befestigbar ist und der andererseits wenigstens einen Saugnapf trägt, und/oder dass
h. der Träger ein Langloch aufweist, durch das eine Befestigungsschraube verläuft, die in ein Gewinde des Gehäuses eingeschraubt ist, und/oder dass
i. ein, insbesondere an dem Gehäuse angeordneter, Tragegriff vorhanden ist.

5. Übungssystem nach einem der Ansprüche 1 bis 4, **dadurch gekennzeichnet, dass**
a. das Übungssystem ein Netzanschlusselement zum Anschließen an ein elektrisches Stromnetz, insbesondere an ein 230V-Stromnetz, aufweist, und/oder dass
b. das Netzanschlusselement als ein Anschlusskabel mit einem Netzstecker oder als eine Kaltgerätebuchse zum Einstecken eines Netzanschlusskabels ausgebildet ist, und/oder dass
c. die Platte wenigstens zwei von der Bedienseite aus zugängliche Netzspannungs-Versorgungssteckbuchsen aufweist, an denen eine Versorgungsnetzspannung, insbesondere eine Wechselspannung von 110V oder 220 V oder 230V oder 240 V anliegt, insbesondere bei einer Wechselspannungsfrequenz von 50 Hz, und/oder dass
d. Übungssystem nach Anspruch 22 und 23, **dadurch gekennzeichnet, dass** zwischen das Netzanschlusselement und wenigstens eine Netzspannungs-Versorgungssteckbuchsen eine Systemsicherung und/oder ein Notausschalter geschaltet ist.

6. Übungssystem nach einem der Ansprüche 1 bis 5, **dadurch gekennzeichnet, dass**
a. die Platte wenigstens zwei von der Bedienseite aus zugängliche Niederspannungs-Versorgungssteckbuchsen aufweist, an denen eine Gleichspannung, insbesondere einen Gleichspannung im Bereich von 1V bis 50 V, insbesondere von 12 V, anliegt, oder dass
b. die Platte wenigstens zwei von der Bedienseite aus zugängliche Niederspannungs-Versorgungssteckbuchsen aufweist, an denen eine Gleichspannung, insbesondere einen Gleichspannung im Bereich von 1V bis 50 V, insbesondere von 12 V, anliegt, wobei das Übungssystem wenigstens einen Transformator aufweist, der die Gleichspannung bereitstellt.

7. Übungssystem nach einem der Ansprüche 1 bis 6, **dadurch gekennzeichnet, dass**
a. wenigstens eine der elektrischen Funktionseinheiten als eine bei Wohnhausinstallationen übliche Funktionseinheit ausgebildet ist, und/oder dass
b. wenigstens eine der elektrischen Funktionseinheiten als Schalter ausgebildet ist, und/oder dass
c. wenigstens eine der elektrischen Funktionseinheiten als Wechselschalter ausgebildet ist, und/oder dass
d. wenigstens eine der elektrischen Funktionseinheiten als Taster, insbesondere als Klingeltaster, ausgebildet ist, und/oder dass
e. wenigstens eine der elektrischen Funktionseinheiten als Kreuzschalter ausgebildet ist, und/oder dass
f. wenigstens eine der elektrischen Funktionseinheiten als Serienschalter ausgebildet ist, und/oder dass
g. wenigstens eine der elektrischen Funktionseinheiten als Doppelwechselschalter ausgebildet ist, und/oder dass
h. wenigstens eine der elektrischen Funktionseinheiten als Relais ausgebildet ist, und/oder dass
i. wenigstens eine der elektrischen Funktionseinheiten als Relais mit Selbsthaltung ausgebildet ist, und/oder dass
j. wenigstens eine der elektrischen Funktionseinheiten als Zeitrelais, insbesondere als Zeitrelais mit Öffnungsfunktion oder als Zeitrelais mit Schließfunktion, ausgebildet ist, und/oder dass
k. wenigstens eine der elektrischen Funktionseinheiten als Summer ausgebildet ist, und/oder dass
l. wenigstens eine der elektrischen Funktionseinheiten als Leuchte, insbesondere als Kontrollleuchte, ausgebildet ist, und/oder dass
m. das Übungssystem wenigstens eine Funktionseinheit aufweist, die zum Betrieb mit einer Niederspannung ausgelegt ist, und/oder dass
n. das Übungssystem wenigstens eine Funktionseinheit aufweist, die zum Betrieb mit einer Niederspannung ausgelegt ist, wobei die Funktionseinheit an von der an Bedienseite aus zugängliche Niederspannungssteckbuchsen angeschlossen ist.

8. Übungssystem nach einem der Ansprüche 1 bis 7, **dadurch gekennzeichnet, dass**
a. das Übungssystem wenigstens eine elektrische Funktionseinheit aufweist, die zum Betrieb mit einer Netzspannung ausgelegt ist, oder dass
b. das Übungssystem wenigstens eine elektrische Funktionseinheit aufweist, die zum Betrieb mit einer Netzspannung ausgelegt ist, wobei die elektrische Funktionseinheit an von der Bedienseite aus zugängliche Netzspannungs-Steckbuchsen angeschlossen ist.

9. Übungssystem nach einem der Ansprüche 6 bis 8, **dadurch gekennzeichnet, dass**
a. sich die Niederspannungssteckbuchsen von den Netzspannungs-Steckbuchsen derart unterscheiden, dass ein in eine Niederspannungssteckbuchse einsteckbarer Niederspannungsstecker nicht in eine Netzspannungs-Steckbuchse einsteckbar ist, und/der dass
b. sich die Niederspannungssteckbuchsen von den Netzspannungs-Steckbuchsen derart unterscheiden, dass ein in eine Netzspannungs-Steckbuchse einsteckbarer Netzstecker nicht in eine Netzspannungs- Niederspannungssteckbuchse einsteckbar ist.

10. Übungssystem nach einem der Ansprüche 1 bis 9, **dadurch gekennzeichnet, dass**
a. das Übungssystem mehrere Kabel aufweist, die endseitig mit in die Steckbuchsen einsteckbaren Steckern versehen sind, und/der dass
b. das Übungssystem mehrere Kabel aufweist, die endseitig mit in die Niederspannungssteckbuchsen einsteckbaren Steckern versehen sind, und/der dass
c. das Übungssystem mehrere Kabel aufweist, die endseitig mit in die Netzspannungs-Steckbuchsen einsteckbaren Steckern versehen sind.
